# EUROPEAN PATENT APPLICATION

(11) **EP 4 760 966 A1**
(43) Date of publication of application: **17.06.2026**
(21) Application number: 24886254.2
(22) Date of filing: 30.10.2024
(51) Int. Cl.: H01M 50/533, H01M 50/536, H01M 50/534, H01M 50/105

(54) **ELECTRODE ASSEMBLY, BATTERY CELL INCLUDING SAME, AND ELECTRODE LEAD WELDING METHOD**

(30) Priority: 01.11.2023 KR 20230149501; 28.10.2024 KR 20240148952
(71) Applicant: LG Energy Solution, Ltd., Seoul 07335 (KR)
(72) Inventor: MOON, Jae Won, Daejeon 34122 (KR); HONG, Eui Jin, Daejeon 34122 (KR); KANG, Gyung Soo, Daejeon 34122 (KR)
(74) Representative: Plasseraud IP
(86) International application number: PCT/KR2024/016818
(87) International publication number: WO 2025/095582

(57) **Abstract**

An electrode assembly according to the present disclosure includes a plurality of electrodes having electrode tabs and an electrode lead coupled to the electrode tabs, wherein the plurality of electrode tabs include a first type electrode tab and a second type electrode tab coupled to one surface of the electrode lead and formed to extend longer than the first type electrode tab.

## Description

### TECHNICAL FIELD

### CROSS-REFERENCE TO RELATED APPLICATIONS

The present application claims priority to Korean Patent Application No. 10-2023-0149501 filed on November 1, 2023 and Korean Patent Application No. 10-2024-0148952 filed on October 28, 2024 in the Republic of Korea, the disclosures of which are incorporated herein by reference.

### TECHNICAL FIELD

The present disclosure relates to an electrode assembly, a battery cell including the same, and an electrode lead welding method.

### BACKGROUND ART

Recently, the depletion of fossil fuels forces to increase the price of energy sources and has strong impact on the growing attention towards environmental pollution, and the need for eco-friendly alternative energy sources is an essential factor for future life. In this context, a variety of energy generation technologies including solar energy, wind energy, tidal energy and the like are being studied, and attention is directed to energy storage systems such as batteries to make use of the produced electrical energy more efficiently.

Moreover, as the technology development and demand for electronic mobile devices and electric vehicles using batteries increase, the demand for batteries as an energy source is rapidly increasing, and accordingly, many studies are being conducted on batteries that meet a variety of needs.

Batteries are gaining attention as an energy source in a wide range of products including mobile devices and electric vehicles. In particular, secondary batteries are regarded as a promising energy resource that can replace the existing products using fossil fuels, and do not produce by-products from the use of energy, so they are attracting attention as an eco-friendly energy source.

Meanwhile, secondary batteries are also attracting attention as an energy source for electric vehicles (EVs), hybrid electric vehicles (HEVs), and plug-in hybrid electric vehicles (Plug-In HEVs) that are hailed as a solution for reducing air pollution from the existing vehicles using fossil fuels such as gasoline vehicles and diesel vehicles. That is, secondary batteries are used in the form of a battery pack including a plurality of battery modules.

Secondary batteries include a positive electrode and a negative electrode, and the positive electrode and the negative electrode are stacked with a separator therebetween to form an electrode assembly. At this time, electrode tabs are formed on each of the positive electrode and the negative electrode, and since they are formed on each of a plurality of positive electrodes and a plurality of negative electrodes, a plurality of electrode tabs are also formed. The plurality of electrode tabs are electrically coupled to electrode leads. Conventionally, electrode tabs are made of metal. Recently, electrode tabs have begun to be made of materials other than metal only. A typical example is a metallized film in which a metal is deposited on a non-metal material, specifically a polymer layer.

When electrode tabs include a metallized film in which a metal layer is deposited on a non-metal layer, there are difficulties in welding electrode leads and electrode tabs. Conventionally, a method in which electrode tabs are first welded together and then electrode leads are added to be welded is used, but when this method is applied to a metallized film, there are problems in which welding is not performed well, or even if welding is performed, it does not reach the target fusion strength or partially peels off.

### SUMMARY

### TECHNICAL PROBLEM

The present disclosure is designed to solve the problems of the related art, and therefore the present disclosure is directed to providing an electrode assembly capable of easily determining a part where an electrode lead is welded to an electrode tab by including an electrode tab formed to extend longer than other electrode tabs so that a position where the electrode lead is disposed may be easily determined when welding is performed with the electrode lead disposed between electrode tabs, a battery cell including the same, and an electrode lead welding method.

### TECHNICAL SOLUTION

An electrode assembly according to one aspect of the present disclosure may include a plurality of electrodes having electrode tabs; and an electrode lead coupled to the electrode tabs, wherein the plurality of electrode tabs may include a first type electrode tab; and a second type electrode tab coupled to one surface of the electrode lead and formed to extend longer than the first type electrode tab.

The second type electrode tab may be coupled to at least one of both surfaces of the electrode lead.

Each of the first type electrode tab and the second type electrode tab may include a pair of metal layers disposed at the outermost sides; and a non-metal layer disposed between the pair of metal layers.

The pair of metal layers are deposited on both surfaces of the non-metal layer.

The non-metal layer may include a polymer, and the metal layer may include aluminum.

The electrode lead may be coupled to the electrode tab at a center of the electrode in a thickness direction.

The second type electrode tab may be configured as a pair, and the pair of second type electrode tabs may be coupled to one side and the other side of the electrode lead, respectively.

The pair of second type electrode tabs may be coupled to both opposite side surfaces of the electrode lead, respectively.

The same number of electrode tabs may be disposed in the upper surface and lower surface directions of the electrode lead based on the electrode lead.

The electrode lead and the second type electrode tab may be coupled by welding.

The first type electrode tab may be configured in plurality, and the plurality of first type electrode tabs may all have the same length.

The plurality of electrode tabs may be stacked in one direction.

A battery cell according to another aspect of the present disclosure may include an electrode assembly; and a battery case in which the electrode assembly is accommodated, wherein the electrode assembly may include a plurality of electrodes having electrode tabs; and an electrode lead coupled to the electrode tabs, wherein the plurality of electrode tabs may include a first type electrode tab; and a second type electrode tab coupled to one surface of the electrode lead and formed to extend longer than the first type electrode tab.

An electrode lead welding method according to still another aspect of the present disclosure may weld an electrode tab and an electrode lead. The electrode lead welding method may include a step of disposing the electrode lead at a place where the electrode tab is located; and a step of welding the electrode tab and the electrode lead, wherein the electrode tab may include a first type electrode tab; and a second type electrode tab coupled to one surface of the electrode lead and formed to extend longer than the first type electrode tab, wherein in the step of disposing the electrode lead, the electrode lead may be disposed at a place where the second type electrode tab is located.

### ADVANTAGEOUS EFFECTS

An electrode assembly, a battery cell including the same, and an electrode lead welding method according to the present disclosure include an electrode tab formed to extend longer than other electrode tabs, so that there is an effect of easily determining a part where an electrode lead is disposed and welded.

### BRIEF DESCRIPTION OF THE DRAWINGS

The accompanying drawings illustrate an exemplary embodiment of the present disclosure and together with the following detailed description, serve to provide a further understanding of the technical aspect of the present disclosure, and thus, the present disclosure should not be construed as being limited to the drawings.
FIG. 1 is a schematic view of a battery cell according to an embodiment of the present disclosure.
FIG. 2 is an enlarged view of part A of FIG. 1.
FIG. 3 is a plan view of the electrode and the electrode tab shown in FIG. 1.
FIG. 4 is a schematic view showing an electrode assembly according to another embodiment of the present disclosure.
FIG. 5 is a cross-sectional view showing a cross-section of an electrode tab according to an embodiment of the present disclosure.
FIG. 6 is a flow chart of an electrode lead welding method according to another embodiment of the present disclosure.

### DETAILED DESCRIPTION

Hereinafter, exemplary embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

### Electrode assembly and battery cell

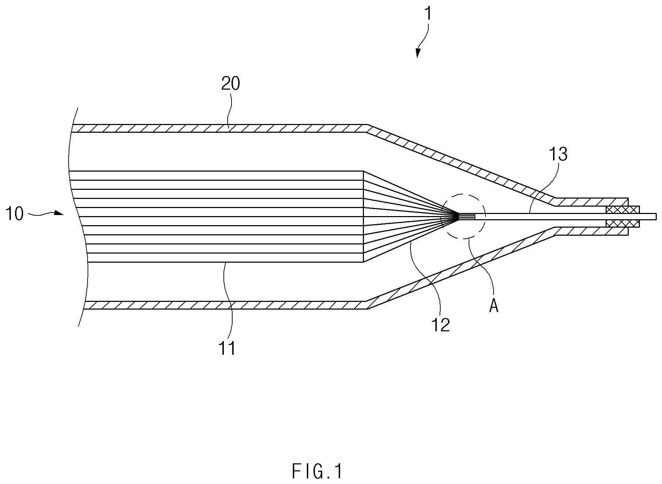

Hereinafter, an electrode assembly 10 according to an embodiment of the present disclosure and a battery cell 1 including the same will be described in detail with reference to FIGS. 1 to 5.

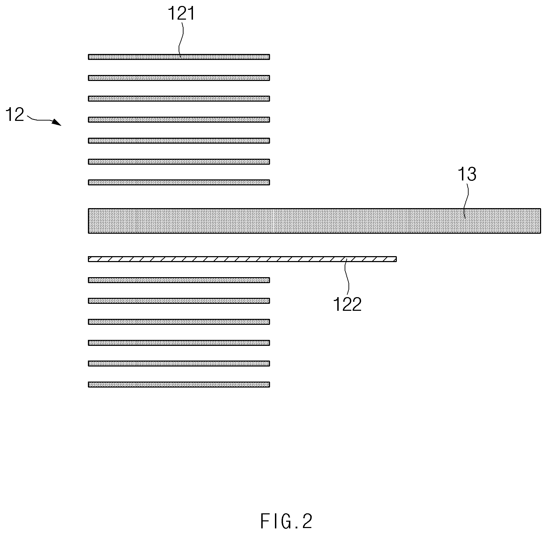

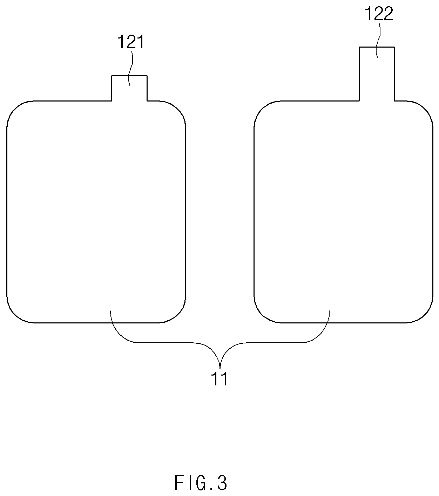

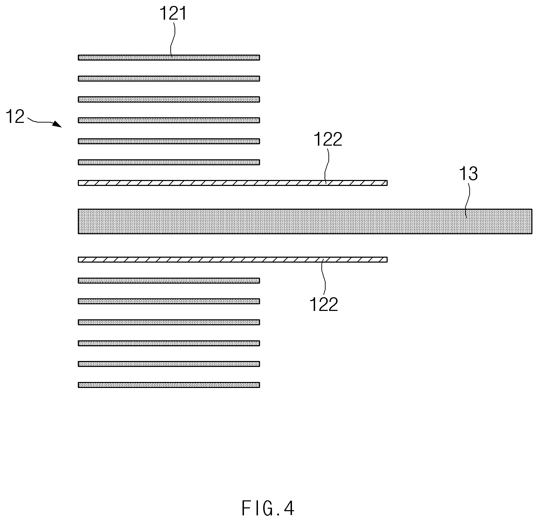

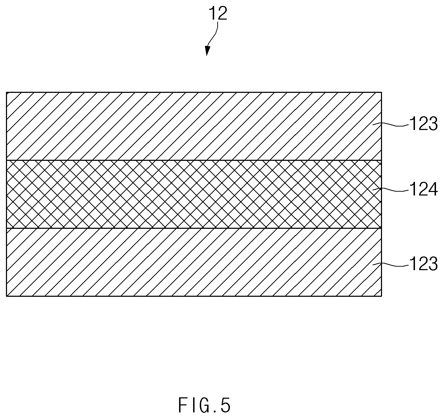

FIG. 1 is a schematic view of a battery cell according to an embodiment of the present disclosure, FIG. 2 is an enlarged view of part A of FIG. 1, FIG. 3 is a plan view of the electrode and the electrode tab shown in FIG. 1, FIG. 4 is a schematic view showing an electrode assembly according to another embodiment of the present disclosure, and FIG. 5 is a cross-sectional view showing a cross-section of an electrode tab according to an embodiment of the present disclosure.

Referring to FIG. 1, a battery cell 1 according to an embodiment of the present disclosure may include an electrode assembly 10 and a battery case 20. The electrode assembly 10 may be accommodated in the battery case 20. An electrolyte may be accommodated within the battery case 20. The electrode assembly 10 may be impregnated with the electrolyte. The electrolyte may permeate the electrode assembly 10, which may enable movement of ions between the electrodes. The battery case 20 may be formed of a pouch-type material.

The electrode assembly 10 according to an embodiment of the present disclosure may include a plurality of electrodes 11 and an electrode lead 13. The electrode assembly 10 may be formed by stacking electrodes 11 and separators on top of each other.

The plurality of electrodes 11 may each be provided with electrode tabs 12. The electrode 11 may be a positive electrode or a negative electrode. The positive electrode may include a region coated with an active material layer and a positive electrode uncoated region where the active material layer is not coated. The negative electrode may include a region coated with an active material layer and a negative electrode uncoated region where the active material layer is not coated.

The electrode tab 12 may be in plurality as it is connected to each of the plurality of electrodes 11. The electrode tab 12 may include a first type electrode tab 121 and a second type electrode tab 122. The electrode tab 12 may be a positive electrode tab or a negative electrode tab. The positive electrode tab is an electrode tab 12 connected to the positive electrode, and the negative electrode tab is an electrode tab 12 connected to the negative electrode. The positive electrode tab and the negative electrode tab may each be coupled to the electrode lead 13.

The first type electrode tab 121 may be a positive electrode tab or a negative electrode tab. The first type electrode tab 121 may be formed in plurality. The plurality of first type electrode tabs 121 may be welded to each other.

The second type electrode tab 122 may be coupled to one surface of the electrode lead 13. The second type electrode tab 122 may be formed to extend longer than the first type electrode tab 121. At this time, the length of the second type electrode tab 122 may extend so that it can be seen to be longer than the first type electrode tab 121 when viewed with the naked eye. Of course, the length difference between the first and second type electrode tabs 121, 122 may be appropriately modified considering observation equipment or the like. The second type electrode tab 122 may be coupled to at least one of both surfaces of the electrode lead 13. That is, the second type electrode tab 122 may be coupled to a lower surface or an upper surface of the electrode lead 13.

At this time, the plurality of first type electrode tabs 121 may all have the same length. Here, the fact that the plurality of first type electrode tabs 121 all have the same length may be interpreted to include not only that the plurality of first type electrode tabs 121 all have the exact same length, but also that they have the same length in appearance. More specifically, even if there is a difference in length between the plurality of first type electrode tabs 121, it may mean that the difference is relatively small compared to the difference in length between the first type electrode tabs 121 and the second type electrode tab 122.

Referring to FIG. 4, the electrode assembly according to an embodiment of the present disclosure may include a pair of second type electrode tabs 122. The pair of second type electrode tabs 122 may be coupled to one side and the other side of the electrode lead 13, respectively. For example, as shown, the pair of second type electrode tabs 122 may be coupled to an upper surface and a lower surface of the electrode lead 13, respectively.

The second type electrode tab 122 is formed longer than the first type electrode tab 121, so that the position of the second type electrode tab 122 may be easily determined among the plurality of first type electrode tabs 121. Since the electrode lead 13 should be welded to the second type electrode tab 122, it is possible to easily distinguish a position where the electrode lead 13 is welded. After the electrode lead 13 is disposed between the second type electrode tab 122 and the first type electrode tab 121, the electrode lead 13 and the electrode tab 12 may be welded.

The first type electrode tab 121 and the second type electrode tab 122 may each include a pair of metal layers 123 and a non-metal layer 124. The first type electrode tab 121 and the second type electrode tab 122 may be a metalized film in which a metal layer is deposited on a non-metal layer. The metalized film may be formed thinner than the electrode tab made of metal.

The metal layers 123 are provided in a pair, and may be disposed at the outermost sides. The metal layers 123 may include aluminum. The metal layers 123 may be provided so that the electrode tabs 12 may be electrically connected to each other.

The non-metal layer 124 may be disposed between the pair of metal layers 123. The metal layers 123 may be deposited on both surfaces of the non-metal layer 124, respectively. Since the metal layer 123 is deposited on the non-metal layer 124, the electrode tab 12 may be formed thinner than when formed of only metal. The non-metal layer 124 may include a polymer.

The electrode lead 13 may be coupled to the electrode tab 12 at a center of the electrode 11 in a thickness direction. The electrode lead 13 may be electrically coupled to the electrode tab 12. A lead film may be coupled to the electrode lead 13. The lead film may be disposed between the electrode lead 13 and the battery case 20.

The electrode lead 13 may be disposed adjacent to the second type electrode tab 122. As shown in FIG. 2, the electrode lead 13 may be positioned above the second type electrode tab 122 and welded. That is, when determining a position for welding the electrode lead 13, there is an effect of being easily determined by looking at the second type electrode tab 122. However, the present disclosure is not limited thereto, and as shown in FIG. 4, the second type electrode tab 122 may be disposed above the electrode lead 13. At this time, the electrode lead 13 may be disposed below the second type electrode tab 122 and welded.

The same number of electrode tabs 12 should be disposed above and below the place where the electrode lead 13 is disposed for the welding of the electrode lead 13, and unless otherwise indicated, it would be necessary to count the number of electrode tabs 12. However, since the second type electrode tab 122 is formed differently longer than the first type electrode tab 121 as described above, the position of the second type electrode tab 122 may be quickly determined, and it is easy to know a place where the electrode lead 13 should be disposed, which has an effect of omitting the process of counting the number of electrode tabs 12.

The same number of electrode tabs 12 may be disposed in the upper surface and lower surface directions of the electrode lead 13 based on the electrode lead 13. The electrode lead 13 and the second type electrode tab 122 may be coupled by welding. The electrode lead 13 may also be coupled to the first type electrode tab 121 by welding.

### Electrode lead welding method

Hereinafter, an electrode lead welding method according to an embodiment of the present disclosure will be described in detail with reference to FIGS. 2, 4, and 6.

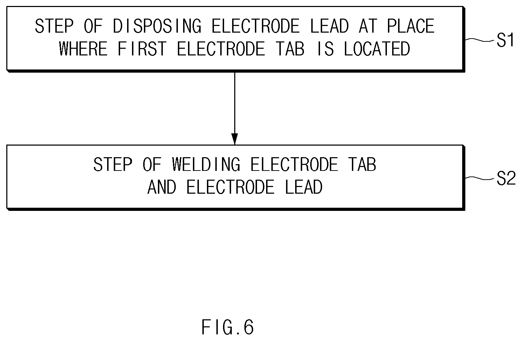

FIG. 2 is a schematic view showing the electrode assembly shown in FIG. 1, FIG. 4 is a schematic view showing an electrode assembly according to another embodiment of the present disclosure, and FIG. 6 is a flow chart of an electrode lead welding method according to another embodiment of the present disclosure.

Hereinafter, an electrode lead welding method using the electrode assembly 10 and the battery cell 1 described above is to be described as another embodiment of the present disclosure.

Referring to FIG. 6, the electrode tab 12 and the electrode lead 13 may be welded through the electrode lead welding method according to an embodiment of the present disclosure. The electrode lead welding method according to an embodiment of the present disclosure may include a step S1 of disposing the electrode lead and a step S2 of welding the electrode tab 12 and the electrode lead 13.

In the step S1 of disposing the electrode lead, the electrode lead 13 may be disposed at a place where the second type electrode tab 122 is located. Since the electrode lead 13 should be disposed at a center of the electrode 11 in a thickness direction and welded, the electrode lead 13 should be disposed at a place where the second type electrode tab 122 is located.

In the step S2 of welding the electrode lead, the electrode lead 13 and the electrode tab 12 may be welded together. At this time, a plurality of electrode tabs 12 may be welded at once. In the step S2 of welding the electrode lead, the number of electrode tabs 12 disposed below the electrode lead 13 may be greater than the number of electrode tabs 12 disposed above the electrode lead 13.

In the electrode lead welding method according to an embodiment of the present disclosure, the electrode tab 12 may have a structure in which a metal layer 123 is deposited on a non-metal layer 124. In the conventional electrode lead welding method, the electrode lead is welded after a pre-welding step in which the electrode tabs are welded separately, but in the method of the present disclosure, the electrode lead 13 and the electrode tab 12 may be welded at once without the pre-welding step.

However, if the electrode lead 13 is driven and disposed on one side of the electrode tab 12 as in the past and then welded, there is a problem that welding is impossible. In the present disclosure, the electrode lead 13 is disposed between the electrode tabs 12 and welded, and the electrode lead 13 is disposed at a center of the electrode 11 in a thickness direction and welded to facilitate welding. Therefore, there is an effect that welding may be performed by appropriately disposing the electrode lead 13 by providing the second type electrode tab 122.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

1: Battery cell
10: Electrode assembly
11: Electrode
12: Electrode tab
121: First type electrode tab
122: Second type electrode tab
123: Metal layer
124: Non-metal layer
13: Electrode lead
20: Battery case
S1: Step of disposing
S2: Step of welding

## Claims

1. An electrode assembly comprising:
a plurality of electrodes having electrode tabs; and
an electrode lead coupled to the electrode tabs,
wherein the plurality of electrode tabs comprise:
a first type electrode tab; and
a second type electrode tab coupled to one surface of the electrode lead and formed to extend longer than the first type electrode tab.

2. The electrode assembly according to claim 1,
wherein the second type electrode tab is coupled to at least one of both surfaces of the electrode lead.

3. The electrode assembly according to claim 1,
wherein each of the first type electrode tab and the second type electrode tab comprises:
a pair of metal layers disposed at the outermost sides; and
a non-metal layer disposed between the pair of metal layers.

4. The electrode assembly according to claim 3,
wherein the pair of metal layers are deposited on both surfaces of the non-metal layer.

5. The electrode assembly according to claim 3,
wherein the non-metal layer comprises a polymer, and
the metal layer comprises aluminum.

6. The electrode assembly according to claim 1,
wherein the electrode lead is coupled to the electrode tab at a center of the electrode in a thickness direction.

7. The electrode assembly according to claim 6,
wherein the second type electrode tab is configured as a pair, and
the pair of second type electrode tabs are coupled to one side and the other side of the electrode lead, respectively.

8. The electrode assembly according to claim 7,
wherein the pair of second type electrode tabs are coupled to both opposite side surfaces of the electrode lead, respectively.

9. The electrode assembly according to claim 6,
wherein the same number of electrode tabs are disposed in the upper surface and lower surface directions of the electrode lead based on the electrode lead.

10. The electrode assembly according to claim 1,
wherein the electrode lead and the second type electrode tab are coupled by welding.

11. The electrode assembly according to claim 1,
wherein the first type electrode tab is configured in plurality, and
the plurality of first type electrode tabs all have the same length.

12. The electrode assembly according to claim 1,
wherein the plurality of electrode tabs are stacked in one direction.

13. A battery cell comprising:
an electrode assembly; and
a battery case in which the electrode assembly is accommodated,
wherein the electrode assembly comprises:
a plurality of electrodes having electrode tabs; and
an electrode lead coupled to the electrode tabs,
wherein the plurality of electrode tabs comprise:
a first type electrode tab; and
a second type electrode tab coupled to one surface of the electrode lead and formed to extend longer than the first type electrode tab.

14. An electrode lead welding method for welding an electrode tab and an electrode lead, the electrode lead welding method comprising:
a step of disposing the electrode lead at a place where the electrode tab is located; and
a step of welding the electrode tab and the electrode lead,
wherein the electrode tab comprises:
a first type electrode tab; and
a second type electrode tab coupled to one surface of the electrode lead and formed to extend longer than the first type electrode tab,
wherein in the step of disposing the electrode lead,
the electrode lead is disposed at a place where the second type electrode tab is located.
